Europäisches Patentamt

European Patent Office

Office européen des brevets

(19)

(11) **EP 1 306 419 A1**

(12) **EUROPEAN PATENT APPLICATION**

(43) Date of publication:
**02.05.2003 Bulletin 2003/18**

(51) Int Cl.$^7$: **C09K 19/58**

(21) Application number: **01125125.3**

(22) Date of filing: **23.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Clariant International Ltd.**<br>**4132 Muttenz 1 (CH)**<br><br>(72) Inventors:<br>• **Amakawa, Haruki**<br>**Shizuoka Pref., 436-0027 (JP)** | • **Nonaka, Toshiaki**<br>**436-0027- Shizuoka Pref. (JP)**<br>• **Dübal, Dr. Hans-Rolf**<br>**65343 Eltville (DE)**<br>• **Wingen, Dr.Rainer**<br>**65795 Hattersheim (DE)**<br><br>(74) Representative: **Hütter, Klaus, Dr. et al**<br>**Clariant Service GmbH**<br>**Patente, Marken, Lizenzen**<br>**Am Unisys-Park 1**<br>**65843 Sulzbach (DE)** |

(54) **Active matrix liquid crystal device and smectic liquid crystal mixture**

(57)    A smectic liquid crystal mixture comprising a smectic liquid crystal base mixture and at least one dopant, which is either a complex ligand or an organic material, in a concentration of 0.01 to 5.0 weight percent . The dopant has preferably at least one -OH or -NH$_2$ or -NH- or -SH group.

With the instant liquid crystal mixtures the electrical conductivity is increased by at least 20 percent with respect to the base mixture.

Moreover, a concentration of the dopant in the range from 0.05 to 1.0 weight percent surpresses or minimizes the image sticking effect up to 10% of the untreated value. Further the present invention relates to active matrix liquid crystal displays comprising said liquid crystal mixtures.

EP 1 306 419 A1

**Description**

The present invention relates to a novel smectic liquid crystal mixture and a novel active matrix liquid crystal device or display. More particularly, it relates to chiral smectic or more specifically ferroelectric liquid crystal mixtures, which enables the generation of gray levels and full color representation useful for computer monitors, TV, DVD, Video and other displays. In particular these displays are useful for high speed applications and for yielding a strong colour saturation by improved backlight techniques which rely upon a high speed liquid crystal. A further aspect of this invention are active matrix displays containing such a mixture, particularly in a monostable geometry.

Monostable chiral smectic liquid crystals have been proposed to be combined with active matrix technology to simultaneously allow the utilisation of a very high 'pixel speed' and show a gray scale, contrary to bistable SSFLC displays.

Takatoh et. al. (6th International Conference on Ferroelectric Liquid Crystals, 1997, 20-24 July, Brest, France; M. Takatoh et al. 1998, SID Digest, 1171-1174.) have demonstrated an AM display based upon chiral smectics using a very high $P_S$ material driven with an active matrix with polycrystalline Silicon -TFT. Nito et.al. (Nito et al., 1993, Journal of the SID, 1/2, 163-169.) have suggested a monostable AM-FLC with much lower $P_S$, however, with the disadvantage of a stripey FLC texture which is not suitable for high contrast displays without further improvements. Furue et. al. (Furue, H. et al., 1998, IDW '98, 209 - 212) suggested a polymer stabilized SSFLCD with a FELIX® mixture with a material having a moderate $P_S$ value.

Asao et. al. have presented a monostable FLC mode (Y. Asao et al., ILCC 2000, Sendai, and Jpn. J. Appl. Phys. 38, L534-L536, 1999 therein called "half-V-shape FLC" mode; see also T. Nonaka et.al., Liquid Crystals 26(11), 1599-1602, 1999, therein called "CDR" mode). Such displays provide, by virtue of their smaller Ps values, solutions for the gray scale problem and the resolution limitation caused by too large $P_S$ values in active matrix panels.

A remaining problem in the application of TFT-FLCD (e.g. monostable FLC) is the limited so-called "image sticking" effect (H. Pauwels et.al., Proceedings of the IDRC, Florida 2000, pp.72-75), caused by the activity of the manifold of charge carriers that are present in the pixel volume and which tend to generate a hysteresis effect, i.e. the type of gray level becomes dependent on the pixel switching history and the correct addressing of gray levels becomes therefore hardly reproducible in practice.

Thus it is seemingly an important factor to maintain a very low ion content and to achieve chemical stability against heat and light, both of which could cause additional ion formation. This demand has in practice lead to the exclusion of any material containing hetero atoms such as N, S, even O in liquid crystal mixtures for active matrix (i. e. TFT or MIM) applications {cp. e.g. Petrov et al., Liq.Cryst. 19(6), 729 (1995) [CAN 124:101494]; Petrov, Proc. SPIE-Int.Soc.Opt.Eng.(1995), 2408 [CAN 123:241500]; Dabrowski, Biul.Wojsk.Akad.Techn. 48(4), 5 (1999) [CAN 131: 163227]; Kirsch, Angew.Chem., Int.Ed.39(23),4216 (2000) and references cited in these papers}.Whereas, so far, this could successfully be done for nematics (cp. e.g. DE-A 1 962 9812, p.12 to 16), there is hardly any smectic ($S_c$) material without such hetero atoms. Thus the use of fast switching smectics for TFT application is strongly limited if not prohibited if the condition to exclude heteroatoms would be mandatory.

The objective of the present invention was therefore to provide a smectic liquid crystal mixture and an active matrix liquid crystal display with very high reproducibility of the gray levels irrespective of the containment of hetero atoms, in particular ferroelectric or antiferroelectric liquid crystal mixtures.

Contrary to the above-mentioned approach to keep liquid crystal materials free of ionic decontaminations, we have surprisingly found that certain dopants as additives to smectic liquid crystal mixtures are indeed effective in removing the image sticking in active matrix displays, while keeping a sufficiently high holding ratio. This is insofar unexpected, as the dopants, e.g. polyethylene glycoles, crown ethers, aza-crown ethers and the like usually contain several oxygen and/or nitrogen atoms and increase the conductivity of the material. Thus, in the traditional view, these dopants should cause a strong image sticking and a low holding ratio. Surprisingly, the opposite is observed.

Thus, the present invention provides a smectic liquid crystal mixture comprising a smectic liquid crystal base mixture and at least one dopant, which is either a complex ligand or an organic material in a concentration of 0.01 to 5.0 weight percent. The electrical conductivity of the instant liquid crystal mixtures is increased by at least 20 percent with respect to the base mixture

In a prefered embodiment of the instant invention the dopant is present in a concentration of 0.05 to 1.0 weight percent, which leads to a surpression or minimization of the image sticking effect up to 10 % of the untreated value.
The liquid crystal mixture according to the invention can be used in active liquid crystal displays.

In particular the present invention relates to a ferroelectric or antiferroelectric liquid crystal mixture, most particularly a monostable ferroelectric liquid crystal mixture, especiallly a monostable ferroelectric liquid crystal mixture having a phase sequence with decreasing temperature

isotropic - nematic or cholesteric - tilted smectic

or

isotropic - nematic or cholesteric - smectic A - tilted smectic,

comprising one or several dopants.

For dopants according to invention with -OH or -NH$_2$- or -NH- or -SH groups, for instance those described in EP-B-385 688, US-A- 5,122, 296 and US-A- 6 ,139, 925, which are hereby incorporated by reference.

The complex ligands according to the invention are either podands, coronands or cryptands. Pertinent terminology and listing of pertinent compounds is hereby incorporated by reference to EP-B- 385 688, EP-B- 502 964 und EP-B- 599 928.

A prefered group of podands encompasses oligoethylendialkylether and polyethylenglykcols, respectively, each prefereably with a molar mass above 350 amu, both sub-groups optionally substituted by pendant groups.

A prefered group of coronands encompasses crown ethers (i.e. medio- and macro-cycles with oxygen donors), aza crown (i.e. medio- and macro-cycles with nitrogen and oxygen donors), each sub-group optionally substituted by pendant groups. Especially prefered are coronands with one or two nitrogen donors, these nitrogen atoms being substitued by -C(=O)-R groups wherein R is an alkyl group (linear or branched) or a cyclic moiety; with this respect reference is made to EP-B-599 928 which is hereby incorporated by reference.

A prefered group of cryptands encompasses bicyclic species with nitrogen and oxygen donors (e.g. kryptofix®), bicyclic species exclusively with oxygen donors , and tricyclic species (e.g. soccerball cryptand) with either nitrogen and oxygen donors or exclusively oxygen donors; all sub-groups can be substituted by pendant groups.

In either group of prefered complex ligands their properties can be adjusted to the additional parameters of the display by modifying the pattern of the podand, coronand and cryptand, resp., through incorporation of hetero atoms (other than nitrogen and oxygen, e.g. sulfur or silicium) as donors, through incorporation of cyclic donor moieties (e.g. pyridine or quinoline end groups in case of podands; e.g. phenylen-diyl in case of benzo crowns) and through attaching pendant groups, respectively. Combinations of these different types of modifications are also possible.

In particular the sum of the concentrations (in weight percent = wt%) of the dopant is below 10 wt%, preferably below 5 wt%, especially below 3 wt%.

Preferably, the average molar mass of the dopants (or in case of one dopant the molar mass) is between 100 and 2000 amu, especially between 200 and 1000 amu, in particular between 200 and 600 amu.

A further object of the invention is to provide a smectic liquid crystal display device, operated in an active matrix panel comprising the above described mixtures.

A further object of the invention is to provide a ferroelectric liquid crystal display device operated in an active matrix panel using the above described mixtures. With preference this display is a monostable ferroelectric display, such as half-V-shape, CDR or short pitch FLC displays.

A further object of the invention is to provide an antiferroelectric liquid crystal display device operated in an active matrix panel using the above described mixtures. With preference this display is a monostable antiferroelectric display, such as the so-called "V-shape" mode.

A further object of the invention is the use of the above described smectic mixtures operated in an active matrix panel, especially if the liquid crystal is a chiral smectic, particularly a monostable chiral smectic mode.

The liquid crystal mixtures according to the invention are prepared in a manner which is customary per se. As a rule the components are dissolved in one another, advantageously at elevated temperatures.

The liquid crystal mixtures according to the invention generally comprises at least two (2), preferably at least five (5), particularly at least eight (8) compounds.

As an alternative to add the dopants into the liquid crystal mixture, they can be mixed into or added onto the alignment layer, so that the dopants are effectively in contact with the smectic liquid crystal.

Optional additional constituents of the mixtures according to invention are materials that increase the light stability (UV stabilizers, e.g. of the "benzophenone" or "benzotriazole" type).Preferably the mixtures may contain 0.01 wt.-% to 10 wt.-% of one or several UV stabilizers; especially prefered are mixtures containing 0.1 wt.-% to 5 wt.-% of one or several UV stabilizers.

Optional additional constitutents of the mixtures according to invention are materials that increase the stability against oxidative degradation (antioxidants, e.g. of the "sterically hindered phenol" type). Preferably the mixtures may contain 0.01 wt.-% to 10 wt.-% of one or several antioxidants; especially prefered are mixtures containing 0.1 wt.-% to 5 wt.-% of one or several antioxidants.

Optionally the mixtures according to invention may contain a combination of UV stabilizers and antioxidants.

Chiral smectic liquid crystal mixtures according to the invention are particularly suitable for use in electro-optical switching and display devices (displays). These displays are usually constructed in such a way that a liquid crystal layer is enclosed on both sides by layers which are usually, in this sequence starting from the LC layer, at least one alignment layer, electrodes and a limiting sheet (for example of glass). In addition, they can contain spacers, adhesive frames, polarizers and, for color displays, thin color-filter layers or are operated in the sequential backlight technique. Other possible components are antireflection, passivation, compensation and barrier layers and, for active-matrix displays, electric non-linear elements, such as thin-film transistors (TFTs) and metal-insulator-metal (MIM) elements. The structure of liquid crystal displays has already been described in detail in relevant monographs (see, for example, T. Tsukuda, "TFT/LCD Liquid crystal displays addressed by thin fim transistors", Japanese Technology Reviews, 1996 Gordon and Breach, ISBN 2-919875-01-91.

An active matrix liquid crystal display within the scope of this invention can also be an optical element that acts as a light valve or a device used to change the polarisation state of light by means of a field-induced re-orientation of the smectic liquid crystal molecules, in particular an FLCOS (ferroelectric liquid crystal on silicon), an optical shutter and the like.

In a preferred embodiment the FLC display is operated in the monostable mode with active matrix panel.

Several documents are cited in this application, e.g. to discuss the state of the art, synthesis of compounds used in the present invention or application of the mixtures according to the invention. All these documents are hereby incorporated by reference.

Example1: cell construction and hysteresis measurement

A solution of LQT 120 (Hitachi Kasei) is applied onto glass substrates with ITO by spin coating at 2500 rpm. The electrode area was 0.9 cm$^2$. The substrates are heated at 200°C for 1 hour to form a film. After rubbing the coated film with a nylon cloth in one direction, the substrates are assembled into a cell with spacers having a thickness of 1.5 μm inserted between the substrates in such a manner that the rubbing directions are anti-parallel to each other.

A chiral smectic liquid crystal mixture (called M1 hereafter) with the phase sequence:

I 100 N 61 smC* is filled into the cell in the isotropic phase, cooling progressively through the nematic (or cholesteric) and the smectic C*. A small bias dc voltage of 3 V is applied during the nematic - smectic C* phase transition to yield a uniform monostable texture.

The cell is now installed in a polarising microscope, equipped with a photodiode to measure the optical transmission between crossed polarisers. The cell is aligned such, that with no voltage applied it appears dark due to the optical axis being arranged parallel to one of the polarisers. By applying 5 Volts the cell is switched into a bright state having a maximum in transmittance.

The cell is then addressed by voltage pulses to test the reproducibility of addressing gray levels. We obtain for the switching

from 0 (zero) Volt to 2.3 Volt a transmittance of 32.8%

from 5 Volt to 2.3 Volt a transmittance of 40.8%

Ideally, however, in both cases, a value of 36.8% should correspond to 2.3 Volt and the result shows an unwanted very pronounced memory of the previous state, i.e. the switching from dark to grey leads to a different grey level compared to bright to grey. This hysteresis effect is time dependent and subject to improvement.

We define the hysteresis effect by the difference:

$$DT = \text{Transmittance (bright to grey)} - \text{Transmittance (dark to grey)}$$

or, in this case:

$$DT = \text{Transmittance (5 V to 2.3 V)} - \text{Transmittance (0 V to 2.3 V)}$$

DT(t) is time dependent. The results of the time-dependent observation is compiled in table 1.

Example 2: Effect of adding a dopant

In the same manner, another cell is prepared and filled with a modified mixture (called M2 hereafter) being composed of 99.8w% M1 and 0.2 w% D1, with the dopant D1 being the compound 1,4,10,13-Tetraoxa-7,16-diaza-7,16-dipentanoyl-cyclooctadecan.

The experiment on the hysteresis effect is the same as in example 1; the results of DT(t) are also included in table 1.

Table 1:

| Comparison of the hysteresis effect of M1 and M2 | | |
|---|---|---|
| Time (in seconds) | DT in % for Mixture M1 | DT in % for Mixture M2 |
| 0 | 8.0 | 10.8 |

Table 1: (continued)

| Comparison of the hysteresis effect of M1 and M2 | | |
|---|---|---|
| Time (in seconds) | DT in % for Mixture M1 | DT in % for Mixture M2 |
| 15 | 4.0 | 6.0 |
| 30 | 2.6 | 1.6 |
| 60 | 2.0 | 0.8 |
| 120 | 1.4 | 0.4 |
| 180 | 1.2 | 0.3 |
| 360 | 1.0 | 0.3 |

The mixture M2 shows a lower saturation voltage. Therefore M2 with 2.3 Volts, a brighter gray level (40%) is addressed as in the case of M1 (36%). Thus, the operation voltage is decreased by the dopant by about 10%.

Example 3

To check the effect of dopants in the combination with stabilisers, a third mixture (called M3 hereafter) is prepared being composed of 99.8 w% M1 and 0.2 w% of stabilizer #3369 (Clariant GmbH). Another mixture (called M4 hereafter) is prepared being composed of 99.6 w% M1and 0.2 w% D1 and 0.2 w% 3369.
Both mixtures are tested in the same manner as in example 1. Table 2 shows the results.

Table 2:

| Comparison of the hysteresis effect of M3 and M4 | | |
|---|---|---|
| Time (in seconds) | DT in % for Mixture M3 | DT in % for Mixture M4 |
| 0 | 14.4 | 14.8 |
| 15 | 11.5 | 6.0 |
| 30 | 9.8 | 3.2 |
| 60 | 7.7 | 2.6 |
| 120 | 5.0 | 2.2 |

Again, the operation voltage is ca. 10% smaller in the M4 as compared to M3.

Example 4: conductivity measurements

The conductivities of the mixtures M1 - M4 where measured by means of a are measured by means of a MTR-1 device (Toya Technica). The current-voltage curves are typically unsymmetric, therefore two values are given:

switch ON state = from low to high voltages
switch OFF state = from high to low voltages

Table 3 summarises the results:

| Mixture | conductivity in the switch ON state (1/TeraOhm*cm) | Change (%) | conductivity in the switch OFF state (1/TeraOhm*cm) | Change (%) |
|---|---|---|---|---|
| M1 | 0.014 | 0 | 0.0033 | 0 |
| M2 | 0.037 | +164 | 0.023 | +596 |
| M3 | 0.016 | +14 | 0.0053 | +60 |
| M4 | 0.333 | +2278 | 0.333 | +9900 |

These results demonstrate the increase of conductivity due to the additives.

**Claims**

1. A smectic liquid crystal mixture comprising a smectic liquid crystal base mixture and at least one dopant, which is either a complex ligand or an organic material, in a concentration of 0.01 to 5.0 weight percent.

2. A smectic liquid crystal mixture according to claim 1, wherein the dopant has at least one -OH or -NH$_2$ or -NH- or -SH group.

3. A smectic liquid crystal mixture according to claim 1 and/or 2 having the phase sequence
   isotropic - nematic or cholesteric - tilted smectic.

4. A smectic liquid crystal mixture according to at least one of the preceding claims, wherein the complex ligands are podants, coronands or cryptands.

5. A smectic liquid crystal mixture according to at least one of the preceding claims, wherein the sum of the concentration of the dopants is below 10 weight percent.

6. A smectic liquid crystal mixture according to at least one of the preceding claims, wherein the average molar mass of the dopants is between 100 and 2000 amu.

7. A smectic liquid crystal mixture according to at least one of the preceding claims, wherein the smectic liquid crystal mixture further comprises a light stabilizer.

8. A smectic liquid crystal mixture according to at least one of the preceding claims, wherein the mixture comprises a smectic liquid crystal base mixture and at least one dopant, wherein the electrical conductivity is increased by at least 20 percent with respect to the base mixture.

9. A smectic liquid crystal mixture according to at least one of the preceding claims, wherein the concentration of the dopant is from 0.05 to 1.0 weight percent, which surpresses or minimizes the image sticking effect up to 10% of the untreated value.

10. Active matrix liquid crystal device, comprising a smectic liquid crystal mixture according to at least one of the claims 1 to 9.

11. Active matrix liquid crystal display according to claim 10, wherein the dopants are mixed into or added onto the alignment layer.

12. Active matrix liquid crystal device according to claims 10 and/or 11, comprising the smectic liquid crystal mixture in monostable orientation.

13. Active matrix liquid crystal device according to at least one of the preceding claims, wherein the projection of the smectic layer normal onto the electrode surface is not parallel to the rubbing direction.

14. Active matrix liquid crystal device according to at least one of the preceding claims, wherein the liquid crystal layer is enclosed on both sides by at least one alignment layer, electrodes and a limiting sheet.

**European Patent Office**

## EUROPEAN SEARCH REPORT

Application Number

EP 01 12 5125

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 702 639 A (ESCHER ET AL) 30 December 1997 (1997-12-30) * column 4, line 4 - line 8 * * column 5, line 26 - column 51, line 30 * * claims * | 1-14 | C09K19/58 |
| D,A | & EP 0 502 964 A (HOECHST AG ) 16 September 1992 (1992-09-16) | | |
| A | EP 0 567 854 A (HOECHST AG) 3 November 1993 (1993-11-03) * claims 1-4 * * page 3, line 43 - page 11, line 26 * | 1-14 | |
| A | PATENT ABSTRACTS OF JAPAN vol. 2000, no. 21, 3 August 2001 (2001-08-03) & JP 2001 100189 A (JAPAN SCIENCE & TECHNOLOGY CORP;NOF CORP; KAJIYAMA CHISATO), 13 April 2001 (2001-04-13) * abstract * | 1-3 | |
| A | US 5 851 425 A (BUCHECKER RICHARD ET AL) 22 December 1998 (1998-12-22) * abstract * * column 1, line 1 - column 3, line 25 * | 1,3,4 | TECHNICAL FIELDS SEARCHED (Int.Cl.7) C09K G02F |
| A | US 5 071 589 A (DÜBAL ET AL) 10 December 1991 (1991-12-10) * column 1, line 5 - line 30; claim 1 * | 1,3 | |
| D,A | EP 0 385 688 A (MATSUSHITA ELECTRIC IND CO LTD) 5 September 1990 (1990-09-05) * claims * | 1-3 | |
| D,A | US 5 122 296 A (JOHTEN ET AL) 16 June 1992 (1992-06-16) * claims * | 1,2 | |
| | -/-- | | |

The present search report has been drawn up for all claims

| Place of search | Date of completion of the search | Examiner |
|---|---|---|
| THE HAGUE | 11 March 2002 | Serbetsoglou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 12 5125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 6 139 925 A (DARIUS ET AL) 31 October 2000 (2000-10-31) * claims * | 1,2,10 | |
| A | US 5 445 762 A (MANERO JAVIER ET AL) 29 August 1995 (1995-08-29) * claims * | 1,4,10 | |
| D,A | & EP 0 599 928 A (HOECHST AG) 8 June 1994 (1994-06-08) | | |

TECHNICAL FIELDS
SEARCHED (Int.Cl.7)

The present search report has been drawn up for all claims

| Place of search | Date of completion of the search | Examiner |
|---|---|---|
| THE HAGUE | 11 March 2002 | Serbetsoglou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**                    EP 01 12 5125

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2002

| Patent document cited in search report | | Publication date | Patent family member(s) | | Publication date |
|---|---|---|---|---|---|
| US 5702639 | A | 30-12-1997 | DE | 3939697 A1 | 06-06-1991 |
| | | | DE | 4011803 A1 | 17-10-1991 |
| | | | AT | 118808 T | 15-03-1995 |
| | | | AU | 640440 B2 | 26-08-1993 |
| | | | AU | 6954591 A | 26-06-1991 |
| | | | CA | 2069936 A1 | 02-06-1991 |
| | | | CN | 1053633 A ,B | 07-08-1991 |
| | | | DE | 59008550 D1 | 30-03-1995 |
| | | | WO | 9108272 A1 | 13-06-1991 |
| | | | EP | 0502964 A1 | 16-09-1992 |
| | | | ES | 2071289 T3 | 16-06-1995 |
| | | | FI | 922407 A | 26-05-1992 |
| | | | HU | 60758 A2 | 28-10-1992 |
| | | | IE | 904328 A1 | 05-06-1991 |
| | | | JP | 2841306 B2 | 24-12-1998 |
| | | | JP | 3180815 A | 06-08-1991 |
| | | | JP | 2647256 B2 | 27-08-1997 |
| | | | JP | 4227685 A | 17-08-1992 |
| | | | KR | 189050 B1 | 01-06-1999 |
| | | | NO | 922135 A | 17-07-1992 |
| | | | NZ | 236274 A | 25-02-1993 |
| | | | PL | 165258 B1 | 30-12-1994 |
| | | | PT | 96055 A | 30-09-1991 |
| | | | ZA | 9009635 A | 24-06-1992 |
| | | | RU | 2092517 C1 | 10-10-1997 |
| EP 0567854 | A | 03-11-1993 | JP | 5297375 A | 12-11-1993 |
| | | | EP | 0567854 A1 | 03-11-1993 |
| | | | US | 5333075 A | 26-07-1994 |
| JP 2001100189 | A | 13-04-2001 | NONE | | |
| US 5851425 | A | 22-12-1998 | CN | 1168378 A | 24-12-1997 |
| | | | EP | 0799830 A1 | 08-10-1997 |
| | | | JP | 10095785 A | 14-04-1998 |
| | | | SG | 64421 A1 | 27-04-1999 |
| US 5071589 | A | 10-12-1991 | AT | 100132 T | 15-01-1994 |
| | | | DE | 3831226 A1 | 30-03-1989 |
| | | | DE | 3887048 D1 | 24-02-1994 |
| | | | EP | 0307880 A2 | 22-03-1989 |
| | | | JP | 1096285 A | 14-04-1989 |
| | | | NO | 884137 A | 20-03-1989 |
| EP 0385688 | A | 05-09-1990 | JP | 2225592 A | 07-09-1990 |
| | | | JP | 2636035 B2 | 30-07-1997 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 01 12 5125

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2002

| Patent document cited in search report | | Publication date | Patent family member(s) | | Publication date |
|---|---|---|---|---|---|
| EP 0385688 | A | | DE<br>DE<br>EP<br>US | 69019042 D1<br>69019042 T2<br>0385688 A2<br>5403511 A | 08-06-1995<br>30-11-1995<br>05-09-1990<br>04-04-1995 |
| US 5122296 | A | 16-06-1992 | JP<br>JP<br>DE<br>DE<br>EP | 2110434 A<br>2151683 A<br>68926901 D1<br>68926901 T2<br>0365255 A2 | 23-04-1990<br>11-06-1990<br>05-09-1996<br>02-01-1997<br>25-04-1990 |
| US 6139925 | A | 31-10-2000 | DE<br>GB<br>JP | 19903746 A1<br>2334031 A<br>11302652 A | 05-08-1999<br>11-08-1999<br>02-11-1999 |
| US 5445762 | A | 29-08-1995 | AU<br>DE<br>WO<br>EP<br>EP<br>ES<br>JP | 2440092 A<br>59208248 D1<br>9304142 A1<br>0528415 A1<br>0599928 A1<br>2101861 T3<br>6510282 T | 16-03-1993<br>24-04-1997<br>04-03-1993<br>24-02-1993<br>08-06-1994<br>16-07-1997<br>17-11-1994 |

EPO FORM P0459

For more details about this annex : see Official Journal of the European Patent Office, No. 12/82